# EUROPEAN PATENT APPLICATION

(11) **EP 0 838 140 A1**
(43) Date of publication of application: **29.04.1998**
(21) Application number: 97202649.6
(22) Date of filing: 29.08.1997
(51) Int. Cl.: A01B 63/111

(54) **Hydraulic lifting system for a tractor**

(30) Priority: 17.09.1996 GB 9619394
(71) Applicant: NEW HOLLAND ITALIA S.p.A., I-41100 Modena (IT)
(72) Inventor: Gregorio, Angelo, 41100 Modena (IT); Mongiardo, Marcello, 41100 Modena (IT)
(74) Representative: Vandenbroucke, Alberic

(57) **Abstract**

A hydraulic lifting system for a tractor that can operate in position mode, draught mode and mixed mode is provided with means 36 for manually setting a minimum height for the lifting system and has an electronic control circuit that prevents the lifting system from being lowered beyond its set minimum position when it is operating in draught mode or mixed mode.

## Description

The present invention relates to a hydraulic lifting system for a tractor operable in a fixed position mode, fixed draught mode or in a mixed mode which is a combination of the draught and position modes.

When the lifting system of such a tractor is operated in fixed position mode, a plough hitched to it will take up a fixed position relative to the tractor and thus theoretically will produce furrows of substantially constant depth, regardless of the soil condition, while the draught (the reaction force or drag on the tractor) will vary in dependence upon the hardness of the ground. In draught mode, the depth of the furrows will vary with the hardness of the ground, being deeper in soft ground and shallower in hard ground, but the draught on the tractor remains substantially constant. In mixed mode, both the position and draught are taken into account in a predetermined proportion.

Lifting systems for a tractor are known which comprise a hydraulic cylinder for raising and lowering an implement hitched to the tractor, means for sensing the draught of the implement on the tractor, means for setting a desired draught of the implement on the tractor, means for sensing the position of the implement relative to the tractor, means for setting the desired position of the implement, mixed mode setting means for setting the relative proportions of draught control and position control when operating in mixed mode, and a control circuit operative : a) in draught mode to control the supply of hydraulic fluid to and from the hydraulic cylinder in dependence upon the difference between the desired and sensed values of the draught so as to maintain a constant draught; b) in position mode to control the supply of hydraulic fluid to and from the hydraulic cylinder in dependence upon the difference between desired and sensed positions of the implement to maintain a constant implement position; and c) in mixed mode to combine the draught control and position control commands in the proportion set by the mixed mode setting means.

Despite the flexibility of control offered by known tractor lifting systems, problems can be encountered under certain conditions when ploughing in draught mode or mixed mode.

In order to be able to understand the conditions under which problems can arise, it should be explained first that a plough can be pulled in one of two ways, which are commonly termed "carried" and "semi-carried". When a plough is semi-carried, its front end only is pivotally attached to the lower arms of the tractor lifting system and its trailing end is supported on at least one wheel on the ground. A fully carried plough on the other hand has a further attachment point at its front end, making a three point hitch, so that it is completely supported off the ground by the lifting system of the tractor and acts as a rigid rearward extension of the tractor chassis.

One of the conditions under which problems can arise is when commencing a furrow in draught mode using a semi-carried plough (i.e., as explained above, a plough that rests on a wheel at its trailing end but is hitched to the lifting system at its leading end). Because the rear shares of the plough initially are kept out of the ground by the wheel and present no resistance, the lifting system, in order to attain the desired draught, pushes the front end of the plough deeper into the ground than the required steady depth of the furrows. An untidy sight near the headlands is the result.

Excessively deep furrows can also occur in draught mode with a carried plough when the tractor makes a transition from hard ground to softer ground. As the softer ground offers less resistance to the shares, the plough will dig deeper to obtain the desired draught as set for the harder ground. Consequently, especially in fields with largely varying ground compositions, an undulating ground surface is created.

It is therefore an object of the present invention to mitigate the foregoing disadvantages of the prior art.

According to the present invention, a hydraulic lifting system for a tractor is provided operable in a fixed position mode, fixed draught mode or in a mixed mode which is a combination of the draught and position modes, comprising :
- a hydraulic cylinder for raising and lowering an implement towed by the tractor;
- means for sensing the draught of the implement on the tractor;
- means for setting a desired draught of the implement on the tractor;
- means for sensing the position of the implement relative to the tractor;
- means for setting the desired position of the implement;
- mixed mode setting means for setting the relative proportions of draught control and position control when operating in mixed mode; and
- a control circuit operative :
   - in draught mode to control the supply of hydraulic fluid to and from the hydraulic cylinder in dependence upon the difference between the desired and sensed values of the draught so as to maintain a constant draught;
   - in position mode to control the supply of hydraulic fluid to and from the hydraulic cylinder in dependence upon the difference between desired and sensed positions of the implement to maintain a constant implement position; and
   - in mixed mode to combine the draught control and position control commands in the proportion set by the mixed mode setting means.

The lifting system is characterised in that means are additionally provided for manual setting of a lower limit position.

The invention will now be described further, by way of example, with reference to the accompanying drawings, in which :
Figure 1 is a perspective view of a hydraulic lifting system for a tractor;
Figure 2 is a schematic side view of the lifting system shown in Figure 1;
Figure 3 shows a control panel for use with the lifting system of Figures 1 and 2; and
Figure 4 is a flow chart representing the method of operation of the lifting system in Figures 1 and 2.

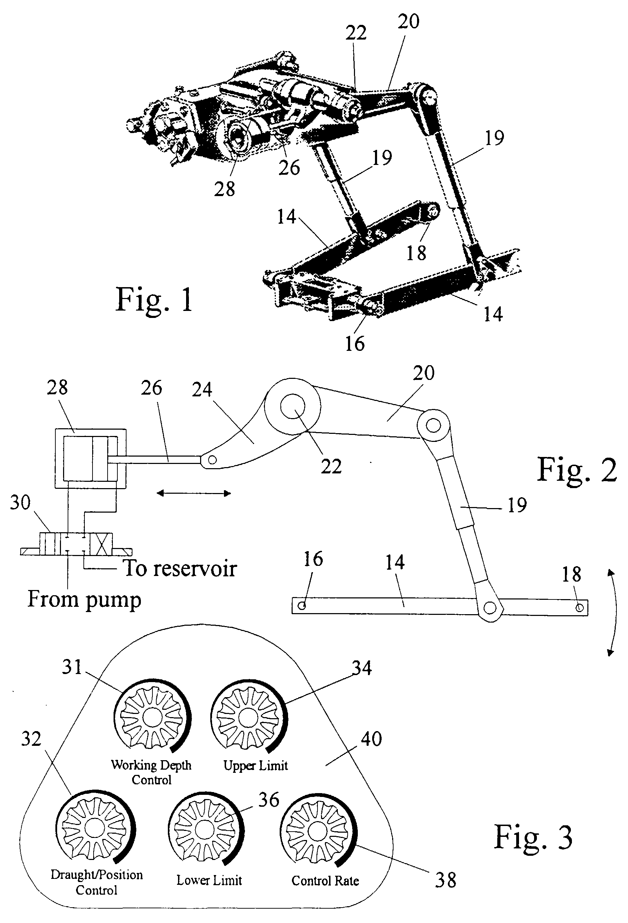

The lifting system of Figures 1 and 2 is known per se and will therefore only be described to the extent necessary for an understanding of the present invention.

The plough, or other implement pulled by the tractor, is attached to hitching points 18 on two lower arms 14 that are pivoted at one end about a fixed axle 16. Along their length, the lower arms 14 are pivotably connected by ties 19 of fixed length to two upper arms 20 pivoted about a second fixed axle 22. A lever 24 that rotates with the upper lifting arms 20 is connected to the piston rod 26 of a double acting hydraulic cylinder 28 connected by a three-position electrohydraulic valve 30 to a hydraulic pump and a reservoir (both not shown). In the illustrated middle position of the valve 30, the working chambers of the hydraulic cylinder 28 are isolated and in the other two positions, the upper lifting arms 20 are raised and lowered, respectively.

A sensor (not shown) is attached to one of the axles 16 or 22 or to one of the lifting arms 14, 20 to determine the actual position of the hitching point 18 for the implement relative to the tractor. Another sensor, which may for example be a strain gauge, is attached to the axle 16 to measure the actual value of the draught. These sensors and the manner in which they are mounted are known per se and need not be described in greater detail. It suffices to know that the system that controls the electrohydraulic valve 30 receives signals that indicate the actual values of position and draught.

The control system also receives signals from five potentiometers 31, 32, 34, 36 and 38 on a separate control panel 40 that is shown in Figure 3. The potentiometers 34 and 36 set the upper and lower limit of the implement, respectively, and the potentiometer 38 allows the operator to set the speed of response of the control system, that is to say the speed with which the lifting arms can be raised and lowered.

The potentiometers 31 and 32 operate in combination to generate signals indicative of desired values of position, draught or a combination of both, the latter allowing the draught and position control to be mixed in a varying proportion. In one end position of the potentiometer 32, the control system operates only in position mode and consequently, the signal received from the working depth control potentiometer 31 represents the desired position. Accordingly, a constant position is maintained regardless of the hardness of the ground and the resultant draught. In the other end position of the potentiometer 32, the control system operates only in draught mode and consequently, with this setting, the signal received from the working depth control potentiometer 31 now represents the desired draught. As such, a constant draught is maintained regardless of the hardness of the ground and the resultant position. In mixed mode, obtained in an intermediate position of the potentiometer 32, the two control strategies are mixed with variable weighting, depending on the position of the potentiometer 32, as will be better understood from the description below.

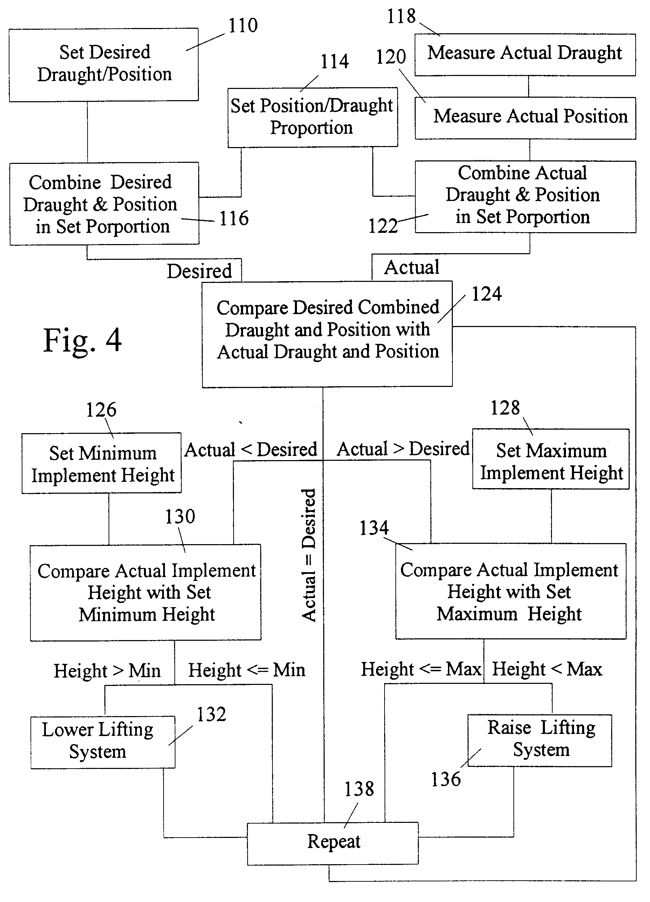

As shown in the flow chart of Figure 4, the first step in the control procedure is for the operator to set the desired value of draught/position in the block 110, this being effected by means of the potentiometer 31. The operator in block 114 also sets the mixed mode proportion by means of the potentiometer 32. The desired position and draught signals are combined in block 116 in the proportion set in block 114 to provide a first, desired, signal.

In each control cycle, the actual values of draught and position are measured in the blocks 118 and 120 by sampling the output signals of the position and draught sensors. These actual signals are similarly combined in the block designated 122 in the proportion set in the block 114 to provide a second, actual, signal. The desired and actual signals are compared in the block designated 124 and depending on the result of the comparison one of three events may occur, namely:
1. If the desired and actual signals are equal, then no movement of the lifting system is required and a new control cycle is commenced;
2. If the actual value exceeds the desired value, then steps are taken to raise the lifting system; and
3. If the actual value is sensed to be less than the desired value then steps are taken to lower the lifting system.

As described so far, the control strategy is conventional. The present invention differs from the prior art in the steps taken when lowering the position of the lifting system. Whereas hitherto the control system would always respond on error signals resulting from the comparison of the desired and actual signals requiring the lifting system to be lowered, in the present invention additional steps are first taken to ensure that the lifting system is not lowered beyond its preset minimum height set in the block 126 by using the potentiometer 36.

Thus in the presence of an error signal indicating that the actual signal is less than the desired signal, in other words an error signal requiring the lifting system to be lowered, a comparison is first made in the block 130 to determine if the height of the lifting system is already at its lowest position, corresponding to the maximum permissible digging depth. For as long as the maximum digging depth has not been reached, the lifting system is lowered further into the ground in the block 132 in order to reduce the error signal. However, once the lower limit of the implement is reached, then it is not lowered any further even if the error signal should persist.

As a precautionary measure, an upper limit may also be set in the block 128 using the potentiometer 34 to limit the extent to which the implement can be raised in order to avoid any part of the implement colliding with the cab or the chassis of the tractor. In the presence of an error signal requiring the implement height to be raised, the current height is first compared in the block 134 with the preset maximum permitted height and action is only taken in the block 136 to raise the lifting system if the implement has not yet reached its preset upper limit. It will be appreciated however that when the lifting system is under draught/position control, i.e. with the implement engaging the ground, there is little chance that a setting of the potentiometers 31 and 32 would require the implement to be raised into a position in which collision risk would exist. In contrast therewith, the upper limit setting is extremely recommendable when switching from draught/position mode to raise mode, in which the implement is lifted out of the ground for facilitating headland turns or transport. Such a switching easily is accomplished by means of a rocker switch (not shown).

On reaching the end of each control cycle, as represented by the block 138, the cycle is recommenced by returning to the block 124 in which the actual and desired values of position and draught are again compared.

By ensuring that the height of the implement never drops below a preset limit when the tractor is operating in draught mode or mixed mode, the invention ensures that excessively deep furrows are avoided when moving between grounds of different hardness using a carried plough and when starting a furrow with a semi-carried plough.

## Claims

1. A hydraulic lifting system for a tractor operable in a fixed position mode, fixed draught mode or in a mixed mode which is a combination of the draught and position modes, comprising :
- a hydraulic cylinder (28) for raising and lowering an implement towed by the tractor;
- means (-) for sensing the draught of the implement on the tractor;
- means (31) for setting a desired draught of the implement on the tractor;
- means (-) for sensing the position of the implement relative to the tractor;
- means (31) for setting the desired position of the implement;
- mixed mode setting means (32) for setting the relative proportions of draught control and position control when operating in mixed mode; and
- a control circuit (-) operative :
- in draught mode to control the supply of hydraulic fluid to and from the hydraulic cylinder (28) in dependence upon the difference between the desired and sensed values of the draught so as to maintain a constant draught;
- in position mode to control the supply of hydraulic fluid to and from the hydraulic cylinder (28) in dependence upon the difference between desired and sensed positions of the implement to maintain a constant implement position; and
- in mixed mode to combine the draught control and position control commands in the proportion set by the mixed mode setting means (32); and
characterised in that means (36) are additionally provided for manual setting of a lower limit position.

2. A hydraulic lifting system according to claim 1 characterized in that the control circuit is an electronic control circuit that acts in draught mode and mixed mode operation to control the supply of hydraulic fluid so as to prevent further lowering of the implement when the set lower limit is sensed to have been reached by the implement.

3. A hydraulic lifting system according to claim 1 or 2, characterized in that the hydraulic lifting system further comprises means (34) for manual setting of an upper limit position, and wherein the control circuit is operative in draught mode and mixed mode operation to control the supply of hydraulic fluid so as to prevent further raising of the implement when the set upper limit is sensed to have been reached by the implement.

4. A hydraulic lifting system according to any of the preceding claims characterized in that the means (36) for manual setting of a lower limit position operates independently from the means (31) for setting the desired position of the implement.
